# EUROPÄISCHE PATENTSCHRIFT

(11) **EP 1 122 133 B1**
(45) Veröffentlichungstag und Bekanntmachung des Hinweises auf die Patenterteilung: **13.04.2005**
(21) Anmeldenummer: 01100318.3
(22) Anmeldetag: 04.01.2001
(51) Int. Cl.: B60R 21/20

(54) **Aktiver Knieschutz mit Luftsack, Lastverteilerplatte und abreissbaren Verbindungselementen**
Active knee-protection device with airbag, load-distributing panel and tearable attaching elements
Dispositif protège-genoux actif à coussin gonflable, panneau de répartition de la force et attaches déchirables

(30) Priorität: 02.02.2000 DE 10004503
(43) Veröffentlichungstag der Anmeldung: 08.08.2001
(73) Patentinhaber: Bayerische Motoren Werke Aktiengesellschaft, 80809 München (DE)
(72) Erfinder: Radlewitz, Thomas, 81245 München (DE); Brauner, Gerhard, 94431 Pilsting (DE); Metzger, Otto, 82110 Germering (DE)

(56) Entgegenhaltungen:
- EP-A- 0 872 388
- DE-U- 29 702 797
- DE-U- 29 710 745
- DE-U- 29 902 032
- DE-U- 29 907 163
- US-A- 5 536 043

## Beschreibung

Die Erfindung bezieht sich auf einen aktiven Knieschutz, wie er im Oberbegriff des Hauptanspruchs beschrieben ist.

Aus der EP 0 885 783 A1 ist ein derartiger Knieschutz bekannt. Eine als Kniefängerplatte bezeichnete Lastverteilerplatte wird in ihrer Ausgangsposition an einer fahrzeugfesten Basisplatte über aufreißbare Haltestifte festgelegt. Die Haltestifte weisen pilzkopfartige Enden auf und werden beim Montieren der Kniefängerplatte offensichtlich durch Öffnungen der Basisplatte hindurchgedrückt. Nähere Angaben sind hierzu allerdings in der Beschreibung der Vorveröffentlichung nicht zu entnehmen. Eine ähnliche Lösung sieht die EP 0 872 388 B1 vor.

Es ist nicht auszuschließen, dass die Enden der Haltestifte beim Montieren beschädigt werden mit der Folge, dass keine sichere Festlegung der Kniefängerplatte gewährleistet ist. Des Weiteren besteht in Fällen, bei denen die Kniefängerplatte Teil des sichtbaren Armaturenbrett ist, die Gefahr, dass sie sich durch diese Befestigungsart nicht einwandfrei positionieren läßt und dadurch das Erscheinungsbild des Armaturenbretts beeinträchtigt wird.

Aufgabe der Erfindung ist es, einen gattungsgemäßen Knieschutz so weiterzubilden, dass er sich einfach montieren läßt, eine sichere Auslösung im Kollisionsfall gewährleistet und in seiner montierten Ausgangslage zu einem gefälligen Erscheinungsbild des Armaturenbrettbereichs beiträgt.

Die Aufgabe wird erfindungsgemäß mit dem kennzeichnenden Merkmalen des Anspruchs 1 gelöst. Weitere Ausgestaltungen der Erfindung ergeben sich aus den Unteransprüchen.

Nach der Erfindung ist demnach die Lastverteilerplatte über Verbindungselemente mit Sollbruchstellen an dem Fahrzeugaufbau gehalten. Sobald der Airbag im Kollisionsfall beginnt, sich zu entfalten und er genügend stark gegen die Rückseite der Lastverteilerplatte drückt, reißen die Verbindungselemente an ihren Sollbruchstellen ab und geben die Platte frei. Dabei sind die Verbindungselemente so angeordnet und ausgelegt, dass ein Aufreißen des Luftsackes durch scharfkantige Bruchstellen vermieden wird. Andererseits läßt sich durch die clipartige Verbindung die Lastverteilerplatte einfach und mühelos an der Abstützplatte befestigen.

Die Verbindungselemente können einstückig an der Lastverteilerplatte ausgeformt sein. Es kann aber auch zweckmäßig sein, sie als getrennte Bauteile ausführen.

In einer weiteren zweckmäßigen Ausgestaltung werden die der Abstützplatte zugekehrten Enden der Fangbänder direkt an den Verbindungselementen befestigt. Auf diese Weise beschränkt sich die Montage der Lastverteilerplatte auf eine einfache Verclipsung an der Abstützplatte.

Des Weiteren sieht die Erfindung in einer vorteilhaften Ausführung Zentrierungen vor, die neben den Verbindungselementen eine sichere Positionierung der Lastverteilerplatte während und nach dem Montieren gewährleisten. Außerdem werden auf diese Weise die Abreißfunktion und die Aufnahme der Gewichts- und Fahrzeugbetriebskräften voneinander entkoppelt. Die Verbindungselemente mit ihren Sollbruchstellen sind somit keinen nennenswerten zusätzlichen Belastungen durch Gewicht- und Betriebskräfte ausgesetzt.

In einer weiteren zwecKmaßigen Ausgestaltung sind Taschen an der Rückseite der Lastverteilerplatte angebracht. In diesen Taschen lassen sich die freien Fangbandlängen während der Montage verstauen. Damit kann die Lastverteilerplatte mit einer ordentlichen Verlegung der Fangbänder komplett vormontiert werden.

Zusammenfassend erlaubt die Erfindung durch den integrierten Aufbau eine Reduzierung der Bauteile und des Montageaufwandes mit einer daraus resultierenden Verringerung der Herstellkosten. Durch die Art der Befestigung der Fangbänder und die Montage ohne sichtbare Schrauben wird das gefällige Erscheinungsbild des Armaturenbrettbereichs merklich verbessert.

Weitere vorteilhafte Ausgestaltungen der Erfindung ergeben sich aus der nachfolgenden Beschreibung anhand der dazugehörenden Zeichnung. Es zeigen
- Fig. 1: den prinzipielle Aufbau eines aktiven Knieschutzes in seinen wichtigsten Elementen,
- Fig. 2: eine erste Anbindung der Lastverteilerplatte an der Abstützplatte mit Zentrierung,
- Fig. 3: eine zweite Ausführungsart der Verbindungselemente für das Anbringen der Lastverteilerplatte,
- Fig. 4: abschnittsweise die Befestigung der Lastverteilerplatte an der Abstützplatte mit einem Verbindungselement nach Fig. 3 und
- Fig. 5: eine weitere Anbringung der Fangbänder im Bereich der Abstützplatte.

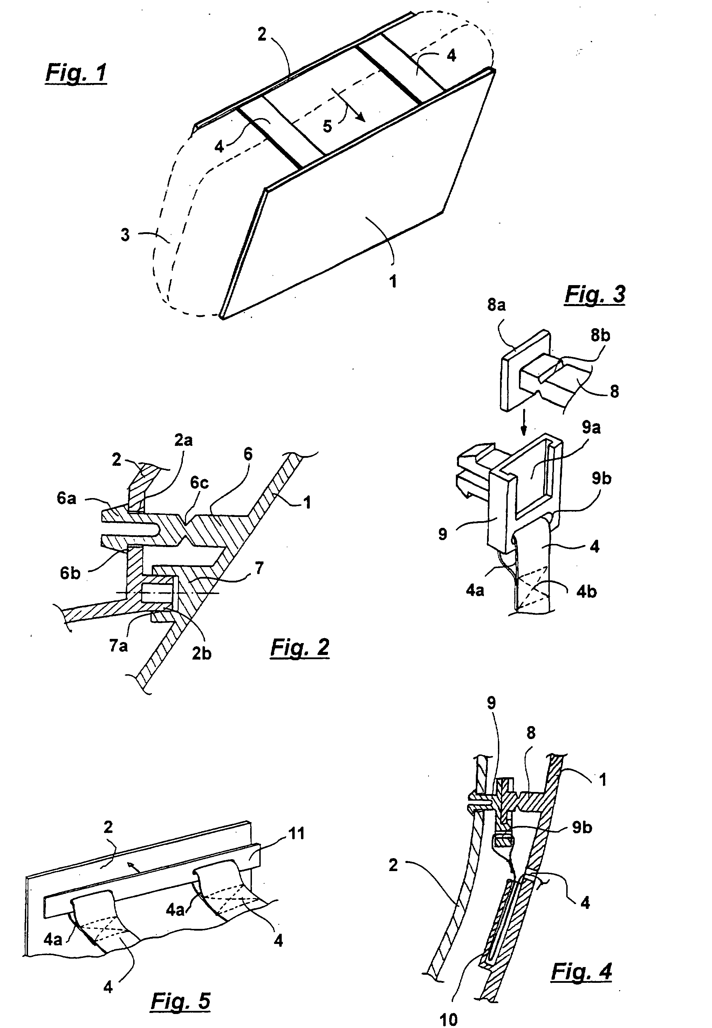

Die Fig. 1 zeigt eine Lastverteilerplatte 1 eines aktiven Knieschutzes, die den nicht dargestellten Knien eines Fahrzeuginsassen zugewandt ist. Entsprechend befindet sich die Lastverteilerplatte 1 in einem unteren Bereich eines Fahrzeugarmaturenbretts und kann Teil dessen Außenfläche sein. Des Weiteren ist in Fig. 1 eine Abstützplatte 2 angedeutet, die in geeigneter, nicht näher beschriebenen Weise mit dem Fahrzeugaufbau eines Kraftfahrzeuges fest verbunden ist. Zwischen diesen beiden Platten liegt ein Luftsack 3, der Teil einer wiederum nicht näher dargestellten, aus Gasgenerator und weiteren Gehäuseteilen bestehenden Airbag-Einheit ist. Fangbänder 4 halten im Auslösefall - wie weiter unten noch genauer beschrieben - die Lastverteilerplatte 1 an der Abstützplatte 2.

Der Knieschutz nach Fig. 1 ist bereits ausgelöst. Der Gasgenerator hat demzufolge nach Erkennen einer Fahrzeugkollision den Luftsack 3 aufgeblasen, der wiederum die anfänglich nahe der Abstützplatte 2 angeordnete und daran befestigte Lastverteilerplatte 1 in Richtung der Knien des Fahrzeuginsassen gedrückt hat, wie dies ein Pfeil 5 symbolisch andeutet. Die anfänglich lose liegenden Fangbänder sind gestrafft und legen durch ihre Längen und Befestigungspunkte die für den Schutz des Insassen optimale Position der Lastverteilerplatte 1 fest.

Eine erste Befestigungsart der Lastverteilerplatte 1 an der Abstützplatte 2 zeigt Fig. 2. Danach sind an der den Knien des Fahrzeuginsassen abgewandten Rückseite der Lastverteilerplatte 1 Verbindungselemente in Form von Fortsätzen 6 einstückig angeformt, die sich in Richtung Abstützplatte 2 und damit in Fahrtrichtung des Kraftfahrzeuges erstrecken. In der Fig. 1 ist wegen der Darstellungsart lediglich ein derartiger Fortsatz 6 erkennbar, es ist aber offensichtlich, dass je nach Gegebenheit zwei oder mehrere solcher Fortsätze vorgesehen sein können.

Der Fortsatz 6 bildet an seinem freien Ende einen federnden Befestigungsabschnitt 6a aus, der in der Art einer Clipverbindung in einem Durchbruch 2a der Abstützplatte 2 verrastet ist. Hierzu weist der Befestigungsabschnitt 6a einen sich zum Ende hin verjüngenden, knopfförmigen Abschnitt auf, der in seinen Außenabmessungen größer gewählt ist als der übrige Fortsatz. Dadurch ergeben sich Abstützflächen 6b, die bei montierter Lastverteilerplatte 1 an den rückseitigen Randabschnitten des Durchbruches 2a anliegen. Um den Befestigungsabschnitt 6a durch den Durchbruch 2a hindurchschieben zu können ist, ist er in Längsrichtung geschlitzt, so dass sich zwei federnde Schenkel ergeben.

Der Fortsatz 6 weist etwa in der Mitte seiner Längserstreckung eine durch Materialschwächung bewirkte Sollbruchstelle 6c auf. Im Kollisionsfall, wenn also der Luftsack aufgeblasen wird und gegen die Rückseite der Lastverteilerplatte 1 drückt, reißt der Fortsatz 6 an der Sollbruchstelle 6c ab und gibt die Lastverteilerplatte 1 frei in Richtung des Fahrzeuginsassen 8 (Fig. 1, Pfeil 5).

Neben ihrer Befestigung ist die Lastverteilerplatte 1 an der Abstützplatte 2 zentriert. Hierfür sind an der Rückseite der Lastverteilerplatte 1 abstehende Aufnahmeabschnitte 7 angeformt. Wie oben bei den Fortsätzen bereits ausgeführt, ist wiederum nur ein solcher Aufnahmeabschnitt 7 dargestellt. An seinem freien, der Rückseite der Lastverteilerplatte 1 abgewandten Ende weist der Aufnahmeabschnitt 7 eine Zentrieröffnung 7a auf, in die ein Zentrierzapfen 7b der Abstützplatte 2 eingreift.

Die Fig. 3 und 4 zeigen eine zweite Befestigungsart. In diesem Fall ist das Verbindungselement der Lastverteilerplatte 1 zweigeteilt und zwar in einen an der Rückseite der Lastverteilerplatte 1 angeformten, abstehenden Steg 8 und einen in die Abstützplatte 2 einclipsbaren Halter 9. Die Verbindung zwischen dem Steg 8 und dem Halter 9 erfolgt formschlüssig. Hierzu sieht der Halter 9 eine hinterschnittene Tasche 9a vor, in die sich ein an der dem freien Ende des Steges 8 angeformten Plättchen 8a nach Art eines Kulissensteins einschieben läßt (siehe Fig. 4). Ansonsten weist der Steg 8 eine Sollbruchstelle 8b in der Art auf, wie sie weiter oben bereits beschriebenen ist. Schließlich ist der Halter 8 in der ebenfalls bereits beschriebenen Weise an der Abstützplatte 2 befestigt.

Fig. 3 zeigt eine Befestigungsart eines der Abstützplatte 2 zugekehrten Endes eines Fangbandes 4. Der Halter 9 sieht hierfür eine Öse 9b vor, durch die das Ende des Fangbandes 4a durchgeschlauft und bei 4b mit dem Fangband vernäht ist.

Um in der Ausgangsposition der Lastverteilerplatte 1 - also solange sie an der Abstützplatte befestigt ist - die freien Fangbandlängen zu verstauen, sind an der Rückseite der Lastverteilerplatte 1 Taschen 10 vorgesehen. Diese Maßnahme erlaubt darüber hinaus eine Erleichterung der Montage der Lastverteilerplatte.

Eine weitere Befestigungsart der Fangbandenden 4a zeigt Fig. 5. Hier ist eine gemeinsame Leiste 11 vorgesehen mit Ösen für jedes Fangbandende 4a. Die Enden werden in der bereits beschrieben Weise durch die Ösen geschlauft und mit dem jeweiligen Fangband 4 vernäht. Sodann wird die Leiste 11 an der zur Lastverteilerplatte zeigenden Vorderseite der Abstützplatte 2 durch Verschrauben oder ähnlichem befestigt.

Es liegt auf der Hand, dass anstelle einer gemeinsamen Leiste die Fangbänder einzeln über Ösen festgelegt werden.

Die anderen Enden der Fangbänder sind an der Lastverteilerplatte befestigt. Die Befestigung kann beispielsweise in der im Stand der Technik nach der eingangs genannten EP 0 885 783 A1 Weise erfolgen.

### Bezugszeichenliste

- 1: Lastverteilerplatte
- 2: Abstützplatte
- 2a: Durchbruch
- 2b: Zentrierzapfen
- 3: Luftsack
- 4: Fangband
- 4a: Fangbandende
- 4b: Nahtstelle
- 5: Pfeil
- 6: Fortsätze
- 6a: Befestigungsabschnitt
- 6b: Abstützflächen
- 6c: Sollbruchstelle
- 7: Aufnahmeabschnitt
- 7a: Zentrieröffnung
- 8: Steg
- 9: Halter
- 9a: Tasche
- 9b: Öse
- 10: Taschen

## Patentansprüche

1. Aktiver Knieschutz für Insassen eines Kraftfahrzeuges mit einer als Kniefänger dienenden, den Knien des Fahrzeuginsassen zugewandten Lastverteilerplatte (1), die in Richtung der Knie durch einen aufblasbaren Luftsack (3) bewegbar ist und mit Fangbändern (4) zur endgültigen Positionierung nach dem Aufblasen des Luftsacks (3) gehalten wird, wobei die Lastverteilerplatte (1) in ihrer Ausgangsposition an einer mit dem Fahrzeugaufbau verbundenen Abstützplatte (2) festgelegt ist und hierfür an ihrer den Knien abgewandten Rückseite abstehende Verbindungselemente mit federnden Abschnitten an den der Abstützplatte (2) zugewandten Enden aufweist, die beim Montieren der Lastverteilerplatte (1) in Durchbrüchen (2a) der Abstützplatte (2) verrasten, **dadurch gekennzeichnet, dass** die Verbindungselemente an einer Stelle ihrer Längserstreckung eine als Sollbruchstelle (6c, 8b) dienende Querschnittsverjüngung aufweisen.

2. Aktiver Knieschutz nach Anspruch 1, **dadurch gekennzeichnet, dass** die Verbindungselemente aus Fortsätzen (6) bestehen, die einstückig an der Rückseite der Lastverteilerplatte (1) ausgeformt sind.

3. Aktiver Knieschutz nach Anspruch 1, **dadurch gekennzeichnet, dass** die Verbindungselemente aus an der Rückseite der Lastverteilerplatte (1) angeformten Stege (8) mit Sollbruchstellen (8b) bestehen, die mit Haltern (9) formschlüssig verbindbar sind und dass sich die Halter (9) in Durchbrüche (2a) der Abstützplatte (2) einclipsen lassen.

4. Aktiver Knieschutz nach einem der Ansprüche 1 bis 3, **dadurch gekennzeichnet, dass** die Lastverteilerplatte (1) über Zentrierungen an der Abstützplatte (2) gehalten ist.

5. Aktiver Knieschutz nach Anspruch 4, **dadurch gekennzeichnet, dass** an der Rückseite der Lastverteilerplatte (1) abstehende Aufnahmeabschnitte (7) mit Zentrierausnehmungen (7a) angeformt sind, in die bei montierter Lastverteilerplatte (1) an der Abstützplatte (2) vorgesehene Zentrierzapfen (2b) eingreifen.

6. Aktiver Knieschutz nach einem der Ansprüche 2 bis 5, **dadurch gekennzeichnet, dass** die der Abstützplatte (2) zugekehrten Enden (4a) der Fangbänder (4) an den zur Festlegung der Lastverteilerplatte (1) vorgesehenen Haltern (9) befestigt sind.

7. Aktiver Knieschutz nach einem der Ansprüche 1 bis 6, **dadurch gekennzeichnet, dass** die durch die montierte Lastverteilerplatte (1) freien Fangbandlängen in Taschen (10) an der Rückseite der Lastverteilerplatte (1) verstaut sind.

## Claims

1. An active knee protection element for passengers of a motor vehicle, comprising a load distribution plate (1) that faces the knees of the vehicle passenger, acts as a knee guard, is movable in the direction of the knee by means of an inflatable airbag (3) and is held by restraining straps (4) for final positioning after inflation of the airbag (3), the load distribution plate (1) being attached, in its starting position, to a supporting plate (2) that is connected to the vehicle structure and comprising, for this purpose, on its rear side remote from the knees, protruding connection elements having resilient portions at the ends facing the supporting plate (2) that engage in openings (2a) in the supporting plate (2) during assembly of the load distribution plate (1), **characterised in that** the connection elements display at one point in their longitudinal extension a sectional tapering that acts as a breaking point (6c, 8b).

2. An active knee protection element according to claim 1, **characterised in that** the connection elements comprise extensions (6) that are formed in one piece on the rear side of the load distribution plate (1).

3. An active knee protection element according to claim 1, **characterised in that** the connection elements comprise webs (8) with breaking points (8b) formed integrally on the rear side of the load distribution plate (1), which webs may be connected to holders (9) with positive fit, and **in that** the holders (9) may be clipped into openings (2a) in the supporting plate (2).

4. An active knee protection element according to any one of claims 1 to 3, **characterised in that** the load distribution plate (1) is held via centrings on the supporting plate (2).

5. An active knee protection element according to claim 4, **characterised in that** moulded on the rear side of the load distribution plate (1) are protruding receiving portions (7) with centring apertures (7a), in which centring pins (2b) provided on the supporting plate (2) engage when the load distribution plate (1) is assembled.

6. An active knee protection element according to any one of claims 2 to 5, **characterised in that** the ends (4a) of the restraining straps (4) facing the supporting plate (2) are fastened to the holders (9) provided for fixing the load distribution plate (1)

7. An active knee protection element according to any one of claims 1 to 6, **characterised in that** the free restraining strap lengths through the assembled load distribution plate (1) are stowed in pockets (10) on the rear side of the load distribution plate (1).

## Revendications

1. Dispositif protège-genoux actif pour des passagers d'un véhicule automobile doté d'un panneau de répartition de force (1) tourné vers les genoux du passager du véhicule et servant de dispositif d'arrêt pour genoux, lequel panneau de répartition de force peut être déplacé dans la direction des genoux par un sac gonflable (3) et être maintenu par des bandes de garde (4) pour le positionnement définitif après le déploiement du sac gonflable (3), le panneau de répartition de force (1) étant fixé dans sa position de départ sur une plaque d'appui (2) reliée à la carrosserie du véhicule et présentant à cet effet des attaches écartées au niveau de sa face arrière opposée aux genoux avec des segments élastiques sur les extrémités tournées vers la plaque d'appui (2) qui s'enclenchent lors du montage du panneau de répartition de force (1) dans des percements (2a) de la plaque d'appui (2),
**caractérisé en ce que**
les attaches présentent sur un point de leur extension longitudinale un rétrécissement de la section transversale servant de point de rupture théorique (6c, 8b).

2. Dispositif protège-genoux actif selon la revendication 1,
**caractérisé en ce que**
les attaches se composent de prolongements (6) formés d'une seule pièce au dos du panneau de répartition de force (1).

3. Dispositif protège-genoux actif selon la revendication 1,
**caractérisé en ce que**
les attaches se composent d'entretoises (8) formées au dos du panneau de répartition de force (1) avec des points de rupture théoriques (8b) pouvant être reliés par complémentarité de forme aux supports (9), et les supports (9) peuvent être clipsés dans des percements (2a) de la plaque d'appui (2).

4. Dispositif protège-genoux actif selon l'une quelconque des revendications 1 à 3,
**caractérisé en ce que**
le panneau de répartition de force (1) est maintenu sur la plaque d'appui (2) par des centrages.

5. Dispositif protège-genoux actif selon la revendication 4,
**caractérisé en ce que**
des segments d'absorption (7) écartés au dos du panneau de répartition de force (1) sont formés avec des évidements de centrage (7a) dans lesquels sont en prise des tourillons de centrage (2b) prévus sur la plaque d'appui (2) à l'état monté du panneau de répartition de force (1).

6. Dispositif protège-genoux actif selon l'une quelconque des revendications 2 à 5,
**caractérisé en ce que**
les extrémités (4a) des bandes de garde (4) tournées vers la plaque d'appui (2) sont fixées aux supports (9) prévus pour fixer le panneau de répartition de force (1).

7. Dispositif protège-genoux actif selon l'une quelconque des revendications 1 à 6,
**caractérisé en ce que**
les longueurs libres de la bande de garde grâce au panneau de répartition de force (1) monté sont rangées dans des poches (10) au dos du panneau de répartition de force (1).
